# EUROPÄISCHE PATENTSCHRIFT

(11) **EP 3 270 494 B1**
(45) Veröffentlichungstag und Bekanntmachung des Hinweises auf die Patenterteilung: **27.03.2024**
(21) Anmeldenummer: 17000837.9
(22) Anmeldetag: 17.05.2017
(51) Int. Cl.: H02K 35/00, H02K 7/18

(54) **VORRICHTUNG ZUR UMWANDLUNG VON BEWEGUNGSENERGIE IN ELEKTRISCHE ENERGIE UND ELEKTROFAHRZEUG**
DEVICE FOR CONVERTING KINETIC ENERGY INTO ELECTRICAL ENERGY AND ELECTRIC VEHICLE
DISPOSITIF DE CONVERSION D'ÉNERGIE CINÉTIQUE EN ÉNERGIE ÉLECTRIQUE ET VÉHICULE ÉLECTRIQUE

(30) Priorität: 17.06.2016 AL 2962016 P
(43) Veröffentlichungstag der Anmeldung: 17.01.2018
(73) Patentinhaber: Hoxha, Luan Fahri, 1000 Pristina, Kosovo (ZZ); Hoxha, Avni Fahri, 53123 Bonn (DE)
(72) Erfinder: Hoxha, Luan Fahri, 1000 Pristina, Kosovo (ZZ); Hoxha, Avni Fahri, 53123 Bonn (DE)
(74) Vertreter: Wagner Albiger & Partner Patentanwälte mbB

(56) Entgegenhaltungen:
- WO-A1-2015/140959
- CN-Y- 2 906 124

## Beschreibung

Die vorliegende Erfindung betrifft eine Vorrichtung zur Umwandlung von Bewegungsenergie in elektrische Energie. Sie betrifft ferner ein Elektrofahrzeug mit einer derartigen Vorrichtung.

Generatoren, insbesondere auch Lineargeneratoren, zur Umwandlung von Bewegungsenergie in elektrische Energie sind auch zur Anwendung in Fahrzeugen beispielsweise aus der WO 2010/000316 A1 bekannt. Derartige Vorrichtungen, die beispielsweise im Stoßdämpfer eines Fahrzeugs verbaut werden können, sollen bislang ungenutzte Bewegungsenergie, beispielsweise Vibrationsenergie oder Trägheitsbewegungen beim Beschleunigen, nutzbar machen. Dies ist insbesondere vorteilhaft, wenn dadurch Energiespeicher eines Elektrofahrzeugs bzw. Hybridfahrzeugs geladen werden können. Auch in herkömmlichen Fahrzeugen mit Verbrennungsmotoren kann eine solche Vorrichtung vorteilhaft eingesetzt werden, da auch Fahrzeuge mit Verbrennungsmotoren zunehmend elektrische Verbraucher aufweisen.

Aus der CN 2 906 124 Y ist ebenfalls ein Generator zur Gewinnung elektrischer Energie aus Schwingungen bekannt, bei dem ein Arbeitsmagnet relativ zu einer Spule bewegt und mittels einer Feder zurück in seine Ausgangsstellung gebracht wird.

Es wird angestrebt, die Masse und insbesondere den benötigten Bauraum derartiger Generatoren möglichst gering zu halten.

Es ist somit eine Aufgabe der vorliegenden Erfindung, eine verbesserte Vorrichtung zur Umwandlung von Bewegungsenergie in elektrische Energie anzugeben, die besonders kompakt und gleichzeitig effizient ist.

Diese Aufgabe wird gelöst durch den Gegenstand der unabhängigen Patentansprüche 1 und 2.

Weitere Ausführungsformen sind Gegenstand der Unteransprüche.

Die erfindungsgemäße Vorrichtung umfasst zumindest einen Arbeitsmagneten und zumindest einen Rahmen mit einer daran angeordneten elektrischen Spule. Die Spule und der Rahmen umgeben den Arbeitsmagneten koaxial. Der Arbeitsmagnet, der Rahmen und die Spule sind derart angeordnet, dass sie relativ zueinander entlang einer Längsachse der Spule beweglich sind. Die Vorrichtung weist ferner einen Rückstellmechanismus auf, mittels dessen der Arbeitsmagnet, der Rahmen und die Spule nach einer Bewegung entlang der Längsachse wieder in eine definierte Ausgangsstellung rückführbar sind. Der Arbeitsmagnet und der Rahmen sind über den Rückstellmechanismus mit einem äußeren Rahmenelement verbunden, wobei das äußere Rahmenelement mit einem Element eines Kraftfahrzeugs verbindbar ist.

Die Vorrichtung hat den Vorteil, dass der Rückstellmechanismus, der einen Energiespeicher umfasst, den Arbeitsmagneten, den Rahmen und die Spule nach einer erfolgten Auslenkung wieder in eine definierte Ausgangsstellung zurückführen kann. Erfindungsgemäß kann die dazu notwendige Energie aus der Bewegung des Arbeitsmagneten, des Rahmens und der Spule stammen und in einem Energiespeicher zwischengespeichert werden.

Gemäß einer Ausführungsform der Erfindung ist der Arbeitsmagnet zylindrisch mit ringförmigem Querschnitt ausgebildet und radial magnetisiert.

Der Arbeitsmagnet kann derart angeordnet sein, dass seine Längsachse mit der Längsachse der Spule zusammenfällt. In diesem Fall sind sowohl der Arbeitsmagnet als auch die Spule zylindrisch ausgebildet und der Arbeitsmagnet ist innerhalb der Spule koaxial zu dieser angeordnet.

Dadurch wird erreicht, dass die die Spule bildenden Leiterschleifen möglichst viele Feldlinien des von dem Arbeitsmagneten erzeugten Magnetfelds schneiden, so dass eine effiziente Erzeugung elektrischer Energie möglich ist.

Der Rückstellmechanismus weist gemäß einer ersten Alternative nach Anspruch 1 zumindest einen Hebel mit einem ersten Hebelarm a, einem zweiten Hebelarm b und einem zwischen den Hebelarmen angeordneten Drehpunkt auf, wobei der erste Hebelarm a mit dem Rahmen in Wirkverbindung steht und der zweite Hebelarm b mit einem Energiespeicher in Wirkverbindung steht.

Dies hat den Vorteil, dass der Rückstellmechanismus besonders kompakt aufbaubar ist. Durch den Einsatz zumindest eines Hebels ist es möglich, bei einer verhältnismäßig geringen Bewegung des Rahmens eine große Wirkung auf den Energiespeicher zu erzielen. Dies gilt, da der Hebelarm b länger ist als der Hebelarm a.

Weiter erfindungsgemäß steht der zweite Hebelarm b zusätzlich mit dem Arbeitsmagneten in Wirkverbindung. Auf diese Weise ist es möglich, auch auf den Arbeitsmagneten direkt eine Rückstellkraft auszuüben.

Der Energiespeicher umfasst, gemäß der ersten Alternative nach Anspruch 1, eine elastische Feder, oder, gemäß einer zweiten Alternative nach Anspruch 2, zumindest einen hydraulischen Energiespeicher. Insbesondere können auch verschiedenartige Energiespeicher miteinander kombiniert werden, so dass der Rückstellmechanismus beispielsweise eine elastische Feder und einen hydraulischen Energiespeicher umfasst.

Gemäß der zweiten Alternative umfasst der hydraulische Energiespeicher ein erstes Fluidreservoir und ein zweites Fluidreservoir, das mit dem Rahmen und dem Arbeitsmagneten in Verbindung steht. Bei dieser Ausführungsform kann auf einen mechanischen Hebelarm verzichtet werden, da eine Hebel- bzw. Verstärkungswirkung über die Ausgestaltung des hydraulischen Energiespeichers erreicht wird, und zwar durch den

Einsatz eines Kolbens. Zudem ist es ohnehin möglich, den hydraulischen Energiespeicher verhältnismäßig kompakt zu gestalten, beispielsweise breit, jedoch flach.

Gemäß einer Ausführungsform weist die Vorrichtung ferner eine reibungsfreie Magnetlagerung des Arbeitsmagneten auf. Dazu kann es insbesondere vorgesehen sein, dass der zylinderförmige Arbeitsmagnet im Inneren eine zentrale Bohrung aufweist, in die ein ebenfalls radial, jedoch gegenpolig magnetisierter Stabmagnet eingeführt wird, der eine Zentrierung des Arbeitsmagneten bewirkt.

Gemäß einer Ausführungsform weist die Vorrichtung ferner eine reibungsfreie Magnetlagerung des Rahmens an dem äußeren Rahmenelement auf. Dazu können sowohl der Rahmen als auch die äußeren Rahmenelemente Permanentmagnete aufweisen, die derart angeordnet sind, dass eine abstoßende Wirkung zwischen dem Rahmen und dem äußeren Rahmenelement erzielt wird. Dabei kann das äußere Rahmenelement derart gestaltet sein, dass es den Rahmen mit dem Arbeitsmagneten und dem Rückstellmechanismus in der Art eines Gehäuses umgibt.

Die reibungsfreie Magnetlagerung hat den Vorteil, dass Verschleiß und energetische Verluste gering gehalten werden können und dass der Arbeitsmagnet auch durch kleine Kräfte bewegbar ist.

Gemäß einem Aspekt der Erfindung wird ein Elektrofahrzeug mit der beschriebenen Vorrichtung angegeben. Die Vorrichtung kann dabei insbesondere dazu eingesetzt werden, einen Speicher für elektrische Energie des Elektrofahrzeugs aufzuladen.

Ausführungsformen der Erfindung werden im Folgenden anhand von Figuren näher beschrieben. Darin zeigen
- Figur 1: schematisch eine erste Ansicht einer Vorrichtung zur Umwandlung von Bewegungsenergie in elektrische Energie in Form einer Prinzipskizze,
- Figur 2: schematisch eine zweite Ansicht der Vorrichtung gemäß Figur 1,
- Figur 3: schematisch eine Vorrichtung zur Umwandlung von Bewegungsenergie in elektrische Energie gemäß einer ersten Ausführungsform der Erfindung,
- Figur 4: eine Vorrichtung zur Umwandlung von Bewegungsenergie in elektrische Energie gemäß einer nicht zur Erfindung gehörenden Ausführungsform,
- Figur 5: eine Vorrichtung zur Umwandlung von Bewegungsenergie in elektrische Energie gemäß einer nicht zur Erfindung gehörenden Ausführungsform,
- Figur 6: eine Vorrichtung zur Umwandlung von Bewegungsenergie in elektrische Energie gemäß einer Ausführungsform der Erfindung,
- Figur 7: eine Vorrichtung zur Umwandlung von Bewegungsenergie in elektrische Energie gemäß einer nicht zur Erfindung gehörenden Ausführungsform und
- Figur 8: eine Vorrichtung zur Umwandlung von Bewegungsenergie in elektrische Energie gemäß einer Ausführungsform der Erfindung.

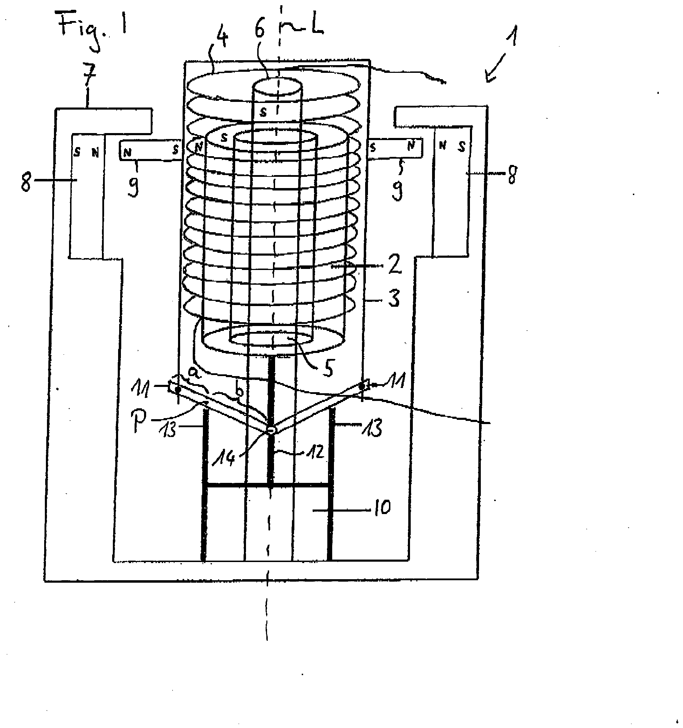

Figur 1 zeigt schematisch eine Ansicht einer Vorrichtung 1 zur Umwandlung von Bewegungsenergie in elektrische Energie in Form einer Prinzipskizze. Die Vorrichtung 1 ist als Lineargenerator zur Erzeugung elektrischer Energie aus einer linearen Bewegung ausgebildet und weist einen Arbeitsmagneten 2 auf, der zylindrisch mit einer zentralen Bohrung 5 ausgebildet ist und der radial magnetisiert ist. Die Längsachse des Arbeitsmagneten 2 und der Vorrichtung 1 ist mit L bezeichnet.

Die Vorrichtung 1 weist ferner einen Rahmen 3 auf, der den Arbeitsmagneten 2 aufnimmt und koaxial umgibt. Innerhalb des Rahmens 3 ist außerdem eine Spule 4 angeordnet, die ebenfalls den Arbeitsmagneten 2 koaxial umgibt. Die Spule 4 ist mit dem Rahmen 3 verbunden.

Der Arbeitsmagnet 2, der Rahmen 3 sowie die Spule 4 sind entlang der Längsachse L der Vorrichtung 1 beweglich. Dazu ist der Arbeitsmagnet 2 reibungsfrei an einem Zentriermagneten 6 gelagert, der als Stabmagnet ausgebildet und ebenfalls radial magnetisiert ist und der innerhalb der zentralen Bohrung 5 des Arbeitsmagneten 2 angeordnet ist. Dabei ist die Magnetisierung des Zentriermagneten 6 gegenpolig zu der des Arbeitsmagneten 2, so dass abstoßende Kräfte zwischen dem Inneren des Arbeitsmagneten 2 und dem Zentriermagneten 6 wirken. Diese abstoßenden Magnetkräfte bewirken eine Zentrierung des Arbeitsmagneten 4 in Bezug auf den Zentriermagneten 6 und wegen dessen koaxialer Ausrichtung auch in Bezug auf die Längsachse L.

Zur reibungsfreien Lagerung des Rahmens 3 ist ebenfalls eine Magnetlagerung vorgesehen: ein äußeres Rahmenelement 7 umgibt den Rahmen 3 in der Art eines Gehäuses. Das äußere Rahmenelement 7 ist mit einem Element eines nicht gezeigten Kraftfahrzeugs verbindbar. Das äußere Rahmenelement 7 weist Permanentmagnete als Führungsmagnete 8 auf, die zu Führungsmagneten 9 des Rahmens 3 korrespondieren. Wegen der auch hier gegenpoligen Magnetisierung der jeweils radial magnetisierten Führungsmagnete 8, 9 treten abstoßende Kräfte zwischen den Führungsmagneten 8 und den Führungsmagneten 9 auf und bewirken eine Zentrierung des Rahmens 3 innerhalb des äußeren Rahmenelements 7.

Die Vorrichtung 1 weist ferner einen Rückstellmechanismus 10 auf, der die Aufgabe hat, den Arbeitsmagneten 2, die Spule 4 und den Rahmen 3 nach einer axialen Bewegung wieder in eine Ausgangsposition zu überführen.

Der Rückstellmechanismus 10 ist über Hebel 11 mit dem Rahmen 3 verbunden. Die Hebel 11 weisen jeweils einen ersten Hebelarm a und einen zweiten Hebelarm b und einen dazwischen angeordneten Drehpunkt P auf. Die Hebel 11 sind gelenkig sowohl mit dem Rahmen 3 als auch mit einer zentralen Stange 12 verbunden, die sich in Richtung der Längsachse L erstreckt und die den Rückstellmechanismus 10 mit dem Arbeitsmagneten 2 verbindet. In den Drehpunkten P liegen die Hebel 11 lose auf einer Stützkonstruktion 13 auf.

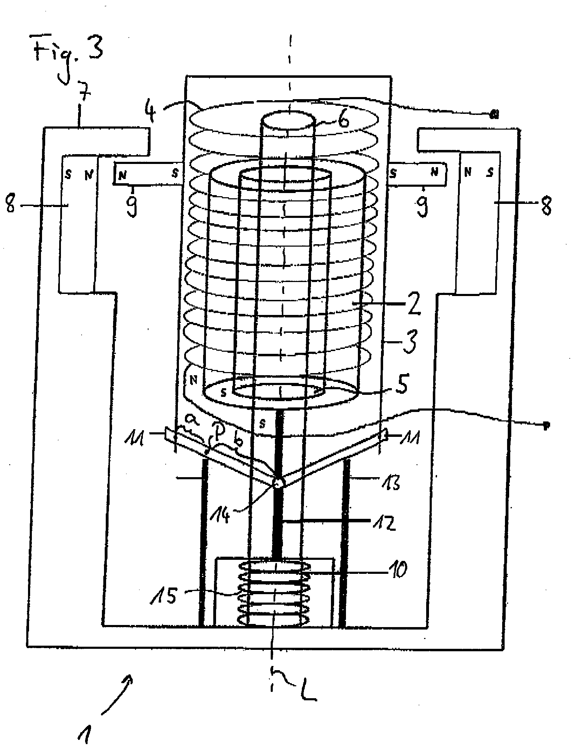

Details und verschiedene Ausführungsformen des Rückstellmechanismus' 10 werden im Zusammenhang mit den Figuren 3-8 näher beschrieben.

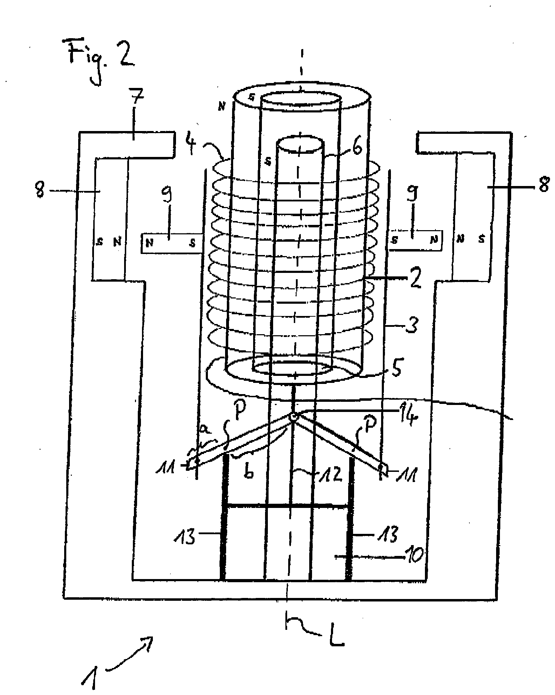

Figur 2 zeigt schematisch die Vorrichtung 1 gemäß Figur 1 in einer Arbeitsstellung des Arbeitsmagneten 2, des Rahmens 3 und der Spule 4. In dieser Arbeitsstellung ist der Arbeitsmagnet 2 gegenüber der Spule 4 und dem Rahmen 3 entlang der Längsachse L relativ nach oben verschoben. Eine derartige Verschiebung kann beispielsweise dadurch zustande kommen, dass der Rahmen 3 und die Spule 4 zusammen mit dem äußeren Rahmenelement 7 einer Bewegung eines Fahrzeugs folgen, mit dem das äußere Rahmenelement 7 verbunden ist, während der Arbeitsmagnet 2 dieser Bewegung aus Trägheitsgründen nicht folgt. Dadurch wird eine relative Translationsbewegung in Richtung der Längsachse L des Arbeitsmagneten 2 in Bezug auf die Spule 4 bewirkt, die in der Spule 4 eine elektrische Spannung induziert.

In Figur 2 ist zudem erkennbar, dass die Hebel 11 durch die Verschiebung des Rahmens 3 um die Drehpunkte P gedreht wurden. Der Gelenkpunkt 14, an dem die Hebel 11 mit der zentralen Stange 12 verbunden sind, wurde zusammen mit dem Arbeitsmagneten 2 nach oben verschoben. Dadurch wurde auf den Rückstellmechanismus 10 eingewirkt in einer Weise, die anhand der Figuren 3 bis 8 näher beschrieben wird. Erfindungsgemäß wurde eine rückstellende Kraft in dem Rückstellmechanismus 10 akkumuliert, die nachfolgend dazu benutzt wird, den Arbeitsmagneten 2, den Rahmen 3 und die Spule 4 wieder in die in Figur 1 gezeigte Ausgangsstellung zu überführen.

Figur 3 zeigt schematisch eine erste Ausführungsform der Vorrichtung 1 zur Umwandlung von Bewegungsenergie in elektrische Energie. Diese Vorrichtung 1 ist dadurch gekennzeichnet, dass der Rückstellmechanismus 10 eine mechanische Feder 15 umfasst, deren Längsachse mit der Längsachse L der Vorrichtung 1 zusammenfällt und die durch eine Translationsbewegung des Rahmens 3 in Richtung der Längsachse L komprimiert oder gedehnt werden kann: Bei einer Relativbewegung zwischen dem Arbeitsmagneten 2 einerseits und der Spule 4 und dem Rahmen 3 andererseits, bei der sich der Rahmen 3 nach unten bewegt, wird die Feder 15 gedehnt. Wird der Rahmen 3 jedoch nach oben bewegt, so wird sie komprimiert.

Bei einer Bewegung wie der im Zusammenhang mit Figur 2 beschriebenen, bei der sich das äußere Rahmenelement 7 zusammen mit dem Rahmen 3, der Spule 4 sowie dem am äußeren Rahmenelement 7 befestigten Rückstellmechanismus 10 bewegt, während der Arbeitsmagnet 2 dieser Bewegung noch nicht folgt, würde die mechanische Feder 15 gedehnt werden. Über die zentrale Stange 12 übt sie dann eine Kraft auf den Arbeitsmagneten 12 aus uns zwingt ihn, der Bewegung des äußeren Rahmens 7 zu folgen, sodass sich relativ gesehen wieder eine Position der einzelnen Elemente äußeres Rahmenelement 7, Arbeitsmagnet 2, Rahmen 3 und Spule 4 zueinander wie in Figur 1 gezeigt ergibt.

Da der Hebelarm B länger ist als der Hebelarm A, wird mit einer verhältnismäßig geringen Translationsbewegung des Rahmens 3 eine größere Translationsbewegung der zentralen Stange 12 und damit eine verhältnismäßig große Dehnung der Feder 15 erzielt. Zudem findet aufgrund der Hebelwirkung im Drehpunkt P bei einer Bewegung des Rahmens 3 nach unten eine Dehnung der Feder 15 nach oben statt. Diese Gegenläufigkeit der Bewegungen aufgrund der Hebelwirkung bewirkt eine Einsparung von Bauraum und ermöglicht eine besonders kompakte Bauweise der Vorrichtung 1.

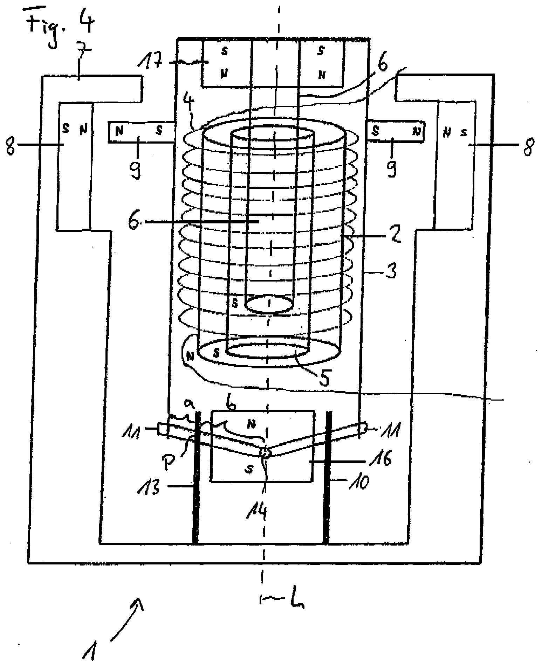

Figur 4 zeigt schematisch eine nicht zur Erfindung gehörende Ausführungsform der Vorrichtung 1, die sich von der in Figur 3 gezeigten dadurch unterscheidet, dass der Rückstellmechanismus 10 mehrere Permanentmagneten 16, 17 umfasst. Gemäß dieser Ausführungsform ist der Permanentmagnet 16 mit dem Gelenkpunkt 14 der Hebel 11 verbunden. Bei einer Translationsbewegung des Rahmens 3 nach unten bewegt sich der Permanentmagnet 16 daher aufgrund der Hebelwirkung nach oben und damit auf den Permanentmagneten 17 zu. Aufgrund der abstoßenden Kraft zwischen den Magneten 16, 17 wird dadurch eine Rückstellkraft in dem Rückstellmechanismus 10 akkumuliert, die eine Trennung der Magnete 16, 17 anstrebt und die nachfolgend eine Rückkehr des Rahmens 3 in seine Ausgangsstellung bewirkt.

Zudem kann auch eine Wechselwirkung zwischen den Magneten 16, 17 und dem Magnetfeld der Spule 4 stattfinden und zur rückstellenden Kraft beitragen.

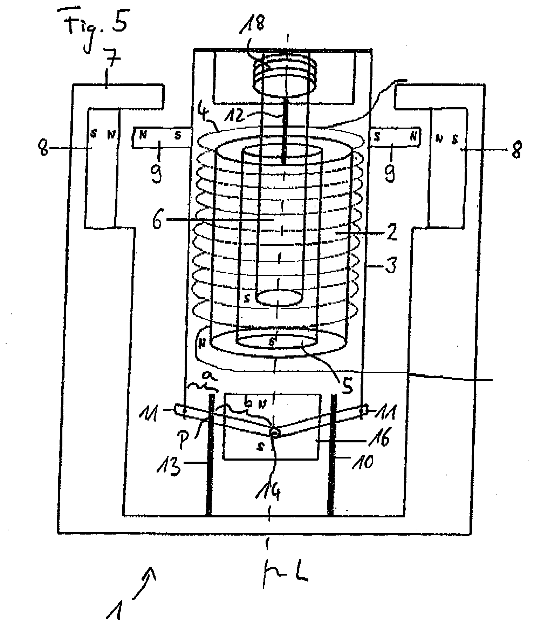

Diese Wechselwirkung wird auch in der in Figur 5 gezeigten nicht zur Erfindung gehörenden Ausführungsform genutzt, die nur den unteren Permanentmagneten 16 umfasst, wobei jedoch am oberen Ende des Rahmens 3 eine mechanische Feder 18 vorgesehen ist, die durch eine Relativbewegung zwischen dem Rahmen 3 und dem Arbeitsmagneten 2 komprimierbar bzw. dehnbar ist.

Gemäß dieser Ausführungsform tragen sowohl die mechanische Feder 18 als auch der Permanentmagnet 16 zur Erzeugung der rückstellenden Kraft auf den Rahmen 3 bei.

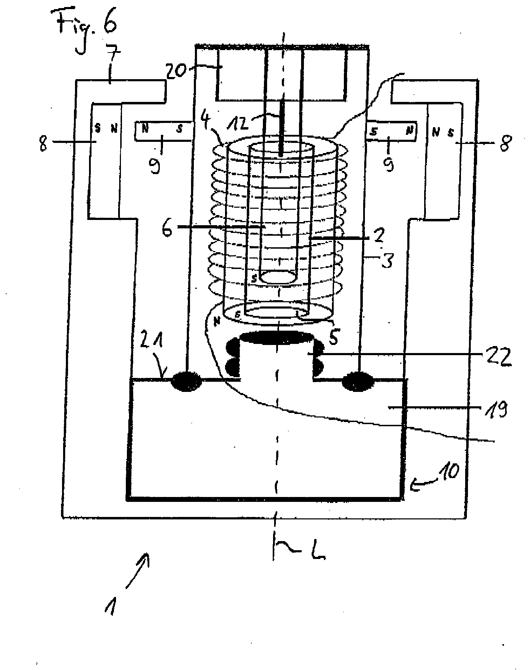

Figur 6 zeigt die Vorrichtung 1 gemäß einer Ausführungsform, bei der der Rückstellmechanismus 10 ein erstes Fluidreservoir 19 und ein zweites Fluidreservoir 20 umfasst. Die Reservoire 19, 20, die mit Flüssigkeit und/oder Gas gefüllt sind, dienen als hydraulische Energiespeicher. Das Reservoir 19 weist eine flexible Oberseite 21 auf, auf die der Rahmen 3 bei einer Translationsbewegung in Richtung der Längsachse L einwirkt, sowie einen Kolben 22. Bei einer Bewegung des Rahmens 3 nach unten wird eine Komprimierung des Fluids in den Reservoiren 19, 20 bewirkt, die eine rückstellende Kraft auf den Rahmen 3 ausübt.

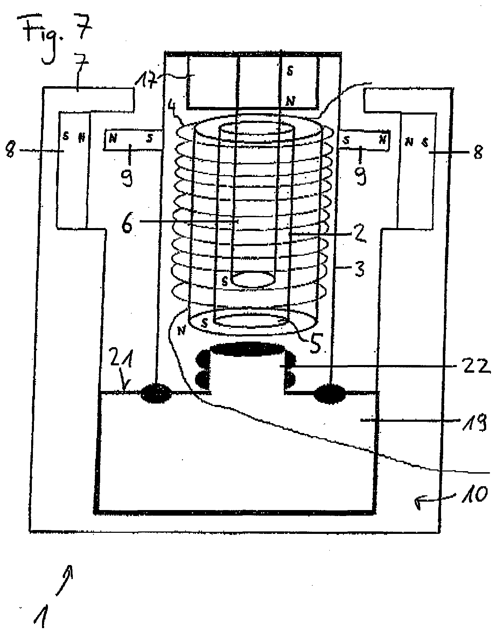

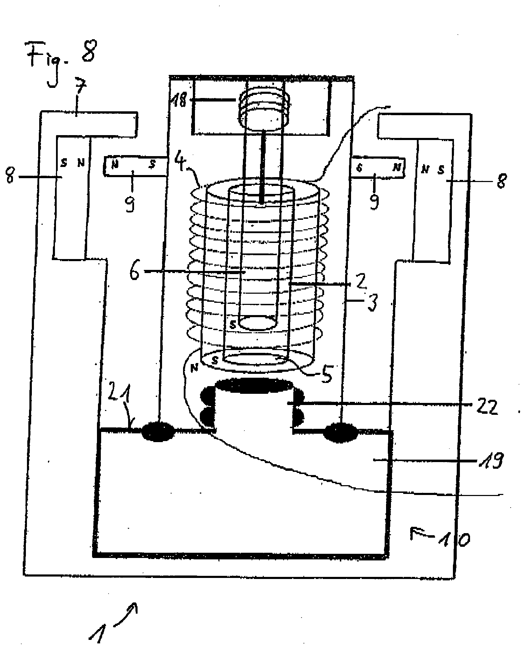

Figur 7 zeigt schematisch eine nicht zur Erfindung gehörende Ausführungsform der Vorrichtung 1, bei der der Rückstellmechanismus 10 eine Kombination aus einem hydraulische Energiespeicher, nämlich dem Fluidreservoir 19, und einem magnetischen Energiespeicher, nämlich dem Permanentmagneten 17, umfasst. Figur 8 zeigt schematisch eine Ausführungsform der Vorrichtung 1, bei der der Rückstellmechanismus 10 eine Kombination aus einem hydraulischen Energiespeicher, nämlich dem Fluidreservoir 19, und einem mechanischen Energiespeicher, nämlich der Feder 18, umfasst.

### Bezugszeichenliste:

- 1: Vorrichtung
- 2: Arbeitsmagnet
- 3: Rahmen
- 4: Spule
- 5: zentrale Bohrung
- 6: Zentriermagnet
- 7: äußeres Rahmenelement
- 8: Führungsmagnet
- 9: Führungsmagnet
- 10: Rückstellmechanismus
- 11: Hebel
- 12: zentrale Stange
- 13: Stützkonstruktion
- 14: Gelenkpunkt
- 15: Feder
- 16: Permanentmagnet
- 17: Permanentmagnet
- 18: Feder
- 19: Fluidreservoir
- 20: Fluidreservoir
- 21: Oberseite
- 22: Kolben

- L: Längsachse
- P: Drehpunkt

## Patentansprüche

1. Vorrichtung (1) zur Umwandlung von Bewegungsenergie in elektrische Energie,
wobei die Vorrichtung (1) folgendes aufweist:
- zumindest einen Arbeitsmagneten (2),
- zumindest einen Rahmen (3) mit einer daran angeordneten elektrischen Spule (4),
wobei die Spule (4) und der Rahmen (3) den Arbeitsmagneten (2) koaxial umgeben und wobei der Arbeitsmagnet (2), der Rahmen (3) und die Spule (4) derart angeordnet sind, dass sie relativ zueinander entlang einer Längsachse (L) der Spule (4) beweglich sind, wobei die Vorrichtung (1) ferner einen Rückstellmechanismus (10) aufweist, mittels dessen der Arbeitsmagnet (2), der Rahmen (3) und die Spule (4) nach einer Bewegung entlang der Längsachse wieder in eine definierte Ausgangsstellung rückführbar sind,
wobei der Arbeitsmagnet (2) und der Rahmen (3) über den Rückstellmechanismus (10) mit einem äußeren Rahmenelement (7) verbunden sind, wobei das äußere Rahmenelement (7) mit einem Element eines Kraftfahrzeugs verbindbar ist,
**dadurch gekennzeichnet, dass**
der Rückstellmechanismus (10) zumindest einen Energiespeicher und einen Hebel (11) mit einem ersten Hebelarm (a), einen zweiten Hebelarm
(b) und einem Drehpunkt (P) aufweist, wobei der Drehpunkt (P) zwischen
dem ersten Hebelarm (a) und dem zweiten Hebelarm (b) angeordnet ist und
der erste Hebelarm (a) mit dem Rahmen (3) in Wirkverbindung steht und
der zweite Hebelarm (b) mit dem Energiespeicher in Wirkverbindung steht
und wobei der zweite Hebelarm (b) zusätzlich mit dem Arbeitsmagneten (2) in Wirkverbindung steht,
wobei der zweite Hebelarm (b) länger ist als der erste Hebelarm (a),
wobei der Energiespeicher eine Feder umfasst, die durch eine Translationsbewegung des Rahmens (3) entlang der Längsachse (L) komprimierbar ist und dadurch in dem Rückstellmechanismus (10) eine Rückstellkraft akkumuliert, die den Arbeitsmagneten (2), den Rahmen (3) und die Spule (4) nach einer erfolgten Auslenkung wieder in eine definierte Ausgangsstellung zurückführen kann.

2. Vorrichtung (1) zur Umwandlung von Bewegungsenergie in elektrische Energie,
wobei die Vorrichtung (1) folgendes aufweist:
- zumindest einen Arbeitsmagneten (2),
- zumindest einen Rahmen (3) mit einer daran angeordneten elektrischen Spule (4),
wobei die Spule (4) und der Rahmen (3) den Arbeitsmagneten (2) koaxial umgeben und wobei der Arbeitsmagnet (2), der Rahmen (3) und die Spule (4) derart angeordnet sind, dass sie relativ zueinander entlang einer Längsachse (L) der Spule (4) beweglich sind, wobei die Vorrichtung (1) ferner einen Rückstellmechanismus (10) aufweist, mittels dessen der Arbeitsmagnet (2), der Rahmen (3) und die Spule (4) nach einer Bewegung entlang der Längsachse wieder in eine definierte Ausgangsstellung rückführbar sind,
wobei der Arbeitsmagnet (2) und der Rahmen (3) über den Rückstellmechanismus (10) mit einem äußeren Rahmenelement (7) verbunden sind, wobei das äußere Rahmenelement (7) mit einem Element eines Kraftfahrzeugs verbindbar ist,
**dadurch gekennzeichnet, dass**
der Rückstellmechanismus (10) zumindest einen hydraulischen Energiespeicher (19, 20) mit einem in einem ersten Fluidreservoir (19) und in einem zweiten Fluidreservoir (20) vorgehaltenen Fluid umfasst, wobei das zweite Fluidreservoir (20) mit dem Rahmen (3) und dem Arbeitsmagneten (2) verbunden ist, wobei bei einer Komprimierung des Fluids bei einer Bewegung des Rahmens (3) in dem Rückstellmechanismus (10) eine Rückstellkraft akkumuliert wird, die den Arbeitsmagneten (2), den Rahmen (3) und die Spule (4) wieder in eine definierte Ausgangsstellung zurückführen kann, indem ein Kolben (22) durch eine Komprimierung des Fluids in dem ersten Fluidreservoir (19) den Arbeitsmagneten (2) relativ zur Spule (4) bewegt und über eine Stange (12) eine Kraft auf das zweite Fluidreservoir (20) ausübt.

3. Vorrichtung (1) nach einem der vorhergehenden Ansprüche,
wobei der Arbeitsmagnet (2) zylindrisch mit ringförmigem Querschnitt ausgebildet und radial magnetisiert ist.

4. Vorrichtung (1) nach Anspruch 3,
wobei der Arbeitsmagnet (2) derart angeordnet ist, dass seine Längsachse mit der Längsachse der Spule (4) zusammenfällt.

5. Vorrichtung (1) nach einem der Ansprüche 1 bis 4,
wobei die Vorrichtung (1) ferner eine reibungsfreie Magnetlagerung des Arbeitsmagneten (2) aufweist.

6. Vorrichtung (1) nach einem der Ansprüche 1 bis 5,
wobei die Vorrichtung (1) ferner eine reibungsfreie Magnetlagerung des Rahmens (3) an dem äußeren Rahmenelement (7) aufweist.

7. Elektrofahrzeug mit einer Vorrichtung (1) nach einem der Ansprüche 1 bis 6.

## Claims

1. Device (1) for converting kinetic energy into electrical energy,
wherein the device (1) comprises the following:
- at least one work magnet (2),
- at least one frame (3) having an electrical coil (4) arranged thereon,
wherein the coil (4) and the frame (3) surround the work magnet (2) coaxially and wherein the work magnet (2), the frame (3) and the coil (4) are arranged such that they are movable relative to one another along a longitudinal axis (L) of the coil (4),
wherein the device (1) furthermore has a restoring mechanism (10), by means of which the work magnet (2), the frame (3) and the coil (4) can be restored into a defined start position after a motion along the longitudinal axis,
wherein the work magnet (2) and the frame (3) are connected via the restoring mechanism (10) to an outer frame element (7), wherein the outer frame element (7) can be connected to an element of a motor vehicle,
**characterised in that**
the restoring mechanism (10) has at least one energy store and a lever (11) having a first lever arm (a), a second lever arm (b) and a pivot point (P), wherein the pivot point (P) is arranged between the first lever arm (a) and the second lever arm (b) and the first lever arm (a) is in operative connection with the frame (3) and the second lever arm (b) is in operative connection with the energy store and wherein the second lever arm (b) is additionally in operative connection with the work magnet (2),
wherein the second lever arm (b) is longer than the first lever arm (a),
wherein the energy store includes a spring which can be compressed by means of a translational motion of the frame (3) along the longitudinal axis (L) and thereby a restoring force accumulates in the restoring mechanism (10) which is capable of restoring the work magnet (2), the frame (3) and the coil (4) after a completed displacement back into a defined start position.

2. Device (1) for converting kinetic energy into electrical energy,
wherein the device (1) comprises the following:
- at least one work magnet (2),
- at least one frame (3) having an electrical coil (4) arranged thereon,
wherein the coil (4) and the frame (3) surround the work magnet (2) coaxially and wherein the work magnet (2), the frame (3) and the coil (4) are arranged such that they are movable relative to one another along a longitudinal axis (L) of the coil (4),
wherein the device (1) furthermore has a restoring mechanism (10), by means of which the work magnet (2), the frame (3) and the coil (4) can be restored into a defined start position after a motion along the longitudinal axis,
wherein the work magnet (2) and the frame (3) are connected via the restoring mechanism (10) to an outer frame element (7), wherein the outer frame element (7) can be connected to an element of a motor vehicle, **characterised in that**
the restoring mechanism (10) comprises at least one hydraulic energy store (19, 20) having a fluid stored in a first fluid reservoir (19) and in a second fluid reservoir (20), wherein the second fluid reservoir (20) is connected to the frame (3) and the work magnet (2), wherein when the fluid is compressed when the frame (3) is moved a restoring force is accumulated in the restoring mechanism (10) which force can restore the work magnet (2), the frame (3) and the coil (4) into a defined start position, **in that** a piston (22) moves the work magnet (2) in relation to the coil (4) by means of a compression of the fluid in the first fluid reservoir (19) and exerts a force onto the second fluid reservoir (20) via a rod (12).

3. Device (1) according to any of the preceding claims,
wherein the work magnet (2) is cylindrical in shape with an annular cross-section and radially magnetized.

4. Device (1) according to claim 3,
wherein the work magnet (2) is arranged such that its longitudinal axis coincides with the longitudinal axis of the coil (4).

5. Device (1) according to any of claims 1 to 4,
wherein the device (1) has furthermore a friction-less magnetic bearing of the work magnet (2).

6. Device (1) according to any of claims 1 to 5,
wherein the device (1) has furthermore a friction-less magnetic bearing of the frame (3) on the outer frame element (7).

7. Electric vehicle having a device (1) according to any of claims 1 to 6.

## Revendications

1. Dispositif (1) de conversion d'énergie cinétique en énergie électrique,
dans lequel le dispositif (1) présente ce qui suit :
- au moins un aimant de travail (2),
- au moins un cadre (3) avec une bobine (4) électrique agencée sur celui-ci,
dans lequel la bobine (4) et le cadre (3) entourent coaxialement l'aimant de travail (2) et dans lequel l'aimant de travail (2), le cadre (3) et la bobine (4) sont agencés de telle manière qu'ils soient mobiles les uns par rapport aux autres le long d'un axe longitudinal (L) de la bobine (4),
dans lequel le dispositif (1) présente de plus un mécanisme de rappel (10), au moyen duquel l'aimant de travail (2), le cadre (3) et la bobine (4) peuvent être ramenés de nouveau dans une position de départ définie après un déplacement le long de l'axe longitudinal,
dans lequel l'aimant de travail (2) et le cadre (3) sont reliés par le biais du mécanisme de rappel (10) à un élément de cadre (7) extérieur, dans lequel l'élément de cadre (7) extérieur peut être relié à un élément d'un véhicule automobile,
**caractérisé en ce que**
le mécanisme de rappel (10) présente au moins un dispositif de stockage d'énergie et un levier (11) avec un premier bras de levier (a), un second bras de levier (b) et un point de rotation (P), dans lequel le point de rotation (P) est agencé entre le premier bras de levier (a) et le second bras de levier (b) et le premier bras de levier (a) est en liaison fonctionnelle avec le cadre (3) et le second bras de levier (b) est en liaison fonctionnelle avec le dispositif de stockage d'énergie et dans lequel le second bras de levier (b) est en outre en liaison fonctionnelle avec l'aimant de travail (2),
dans lequel le second bras de levier (b) est plus long que le premier bras de levier (a),
dans lequel le dispositif de stockage d'énergie comprend un ressort qui peut être comprimé par un mouvement de translation du cadre (3) le long de l'axe longitudinal (L) et ainsi accumule une force de rappel dans le mécanisme de rappel (10) qui peut ramener de nouveau l'aimant de travail (2), le cadre (3) et la bobine (4) dans une position de départ définie après une déviation effectuée.

2. Dispositif (1) de conversion d'énergie cinétique en énergie électrique,
dans lequel le dispositif (1) présente ce qui suit :
- au moins un aimant de travail (2),
- au moins un cadre (3) avec une bobine (4) électrique agencée sur celui-ci,
dans lequel la bobine (4) et le cadre (3) entourent coaxialement l'aimant de travail (2) et dans lequel l'aimant de travail (2), le cadre (3) et la bobine (4) sont agencés de telle manière qu'ils soient mobiles les uns par rapport aux autres le long d'un axe longitudinal (L) de la bobine (4),
dans lequel le dispositif (1) présente de plus un mécanisme de rappel (10), au moyen duquel l'aimant de travail (2), le cadre (3) et la bobine (4) peuvent être ramenés de nouveau dans une position de départ définie après un déplacement le long de l'axe longitudinal,
dans lequel l'aimant de travail (2) et le cadre (3) sont reliés par le biais du mécanisme de rappel (10) à un élément de cadre (7) extérieur, dans lequel l'élément de cadre (7) extérieur peut être relié à un élément d'un véhicule automobile, **caractérisé en ce que**
le mécanisme de rappel (10) comprend au moins un dispositif de stockage d'énergie (19, 20) hydraulique avec un fluide conservé dans un premier réservoir de fluide (19) et dans un second réservoir de fluide (20), dans lequel le second réservoir de fluide (20) est relié au cadre (3) et à l'aimant de travail (2), dans lequel, lors d'une compression du fluide lors d'un mouvement du cadre (3) dans le mécanisme de rappel (10), une force de rappel est accumulée, force de rappel qui peut de nouveau ramener l'aimant de travail (2), le cadre (3) et la bobine (4) dans une position de départ définie, **en ce qu'**un piston (22) déplace l'aimant de travail (2) par rapport à la bobine (4) par une compression du fluide dans le premier réservoir de fluide (19) et exerce par le biais d'une tige (12) une force sur le second réservoir de fluide (20).

3. Dispositif (1) selon l'une quelconque des revendications précédentes,
dans lequel l'aimant de travail (2) est formé de manière cylindrique avec une section transversale annulaire et magnétisé radialement.

4. Dispositif (1) selon la revendication 3,
dans lequel l'aimant de travail (2) est agencé de telle manière que son axe longitudinal coïncide avec l'axe longitudinal de la bobine (4).

5. Dispositif (1) selon l'une quelconque des revendications 1 à 4,
dans lequel le dispositif (1) présente de plus un logement magnétique sans friction de l'aimant de travail (2).

6. Dispositif (1) selon l'une quelconque des revendications 1 à 5,
dans lequel le dispositif (1) présente de plus un logement magnétique sans friction du cadre (3) au niveau de l'élément de cadre (7) extérieur.

7. Véhicule électrique avec un dispositif (1) selon l'une quelconque des revendications 1 à 6.
